# EUROPÄISCHE PATENTANMELDUNG

(11) **EP 4 574 392 A1**
(43) Veröffentlichungstag der Anmeldung: **25.06.2025**
(21) Anmeldenummer: 23218182.6
(22) Anmeldetag: 19.12.2023
(51) Int. Cl.: B29C 45/33, B29C 45/17

(54) **KERNZUGEINHEIT FÜR SPRITZGUSSWERKZEUG**

(71) Anmelder: Ypsomed AG, 3401 Burgdorf (CH)
(72) Erfinder: Hoti, Arjen, 3123 Belp (CH)
(74) Vertreter: Meier Obertüfer, Jürg

(57) **Zusammenfassung**

Die Erfindung betrifft eine Kernzugeinheit zur Bewegung eines Formkerns relativ zu einem Spritzgusswerkzeug in einer ausschliesslich axialen Bewegungsrichtung ohne überlagerte Rotation, zur Entformung, nach erfolgtem Spritzvorgang, eines länglichen, hohlzylindrischen Formteils wie beispielsweise eines Gehäuseteils eines medizinischen Injektionsgeräts. Die Kernzugeinheit umfasst einen Schlitten (11) oder Wagen, auf welchen der Formkern während dem Spritzgussvorgang festmontiert ist, eine Schlittenlagerung mit Linearführungselementen zur Führung einer Verschiebung des Schlittens in der axialen Bewegungsrichtung, und einen sicheren, präzisen und platzsparenden Schlittenantrieb. Der Schlittenantrieb umfasst einen Elektromotor (150) zur Rotation einer in der axialen Bewegungsrichtung relativ zu dem Spritzgusswerkzeug nicht verschiebbar gelagerten Gewindestange (151) oder Spindel.

## Beschreibung

Mittels Spritzgussanlagen können Formteile aus thermoplastischen Kunststoffen in grossen Mengen hergestellt werden. Eine Aussenform des Formteils ist definiert durch ein Spritzgusswerkzeug mit zwei Aussenschalen, welche nach Ablauf einer Abkühlzeit von einigen Sekunden nach dem Spritzvorgang durch eine Bewegung in einer ersten Richtung getrennt werden. Zur Herstellung von Hohlkörpern werden Formkerne verwendet, welche zusammen mit den Aussenschalen einen Formhohlraum bilden. Zur Entformung des Formteils werden die Formkerne von Kernzugeinheiten in einer zweiten Richtung aus dem Spritzgusswerkzeug gezogen. Durch Anschlag und Blockieren der Formteile an einer Abstreifkante werden die Formteile dabei von den Formkernen gelöst.

Die Patentanmeldung WO13006883 A2 beschreibt ein Spritzgusswerkzeug zur Herstellung von Hohlkörpern aus Kunststoff, umfassend eine Aussenform und einen Formkern, der relativ bezüglich der Aussenform zwischen einer Arbeitsstellung und einer Freigabestellung entlang eines Verstellweges verschiebbar ist, wobei der Formkern mit der Aussenform in der geschlossenen Arbeitsstellung einen Formhohlraum ausbildet. Ein Antriebsorgan mit einer durch ein Druckmedium beaufschlagbaren Zylinder-Kolbenanordnung verlagert den Formkern entlang seines Verstellweges. Das der Aussenform abgewendete Kolbenstangenende einer Kolbenstange der Zylinder-Kolbenanordnung ist mit dem Formkern über ein sich in Richtung des Verstellweges erstreckendes Stellelement gekoppelt. Damit wird bei einem sich in der Arbeitsstellung befindlichen Formkern ein geringerer Überstand der Stellvorrichtung über die Aussenform hinaus erzielt.

Die Patentanmeldung WO12051640 A1 beschreibt einen Antrieb für einen Formkern geeignet zur Entformung von komplexen Bereichen von Spritz- oder Druckgussteilen. Der Antrieb weist zwei oder mehrere elektrische Motoren auf, wobei der Formkern auf einer physischen Achse angeordnet ist. Die Achse ist über ein erstes Getriebe mit einem ersten Motor zur Erzeugung einer Linearbewegung der Achse und über ein zweites Getriebe mit einem zweiten Motor zur Erzeugung einer Rotationsbewegung der Achse verbunden. Die beiden Motoren sind getrennt steuerbar zur Erzeugung von unterschiedlichen Gewindesteigungen beziehungsweise einer beliebigen Kombination von Dreh- und Linearbewegungen. Die Linearbewegung wird erzeugt durch eine axial unverschiebliche Mutter mit Innengewinde, welche in ein nichtrotierendes Aussengewinde der physischen Achse eingreift.

Bei Antrieben basierend auf Druckmedien oder Hydraulik besteht das Risiko von Leckagen, welche zumindest für Komponenten von medizintechnischen Geräten eine Entsorgung von verschmutzten Formteilen bedingen. Falls ein hydraulischer Antrieb nicht ausreichend entlüftet wird, kann die im Hydraulikkreislauf verbleibende, komprimierbare Luft zu unpräzisen oder schwankenden Bewegungen führen. Bei Hydraulikantrieben ist nur eine beschränkte Steuerung des Druckmediums oder der Krafteinwirkung auf den Formkern möglich, und auf keinen Fall eine Abbremsung der Bewegung des Formkernes.

Es ist eine Aufgabe der vorliegenden Erfindung, eine Kernzugeinheit zur Bewegung eines Formkerns einer Spritzgussanlage mit einem sicheren, präzisen und platzsparenden Antrieb anzugeben.

Die Aufgabe wird gelöst durch eine Kernzugeinheit zur Verschiebung eines Formkernes oder Kernelements relativ zu einem Spritzgusswerkzeug in einer ausschliesslich axialen Bewegungsrichtung ohne überlagerte Rotation, zur Entformung, nach erfolgtem Spritzvorgang, eines länglichen, hohlzylindrischen Formteils wie beispielsweise eines Gehäuseteils eines medizinischen Injektionsgeräts. Die Kernzugeinheit umfasst einen Schlitten oder Wagen, auf welchen der Formkern während dem Spritzgussvorgang fest montiert ist, eine Schlittenlagerung mit Linearführungselementen zur Führung einer Verschiebung des Schlittens in der axialen Bewegungsrichtung, und einen Schlittenantrieb. Der Schlittenantrieb umfasst einen Elektromotor zur Rotation einer in der axialen Bewegungsrichtung relativ zu dem Spritzgusswerkzeug nicht verschiebbar gelagerten Gewindestange oder Spindel.

Durch den axial unbeweglich rotierenden Antrieb mit Getriebekopplung zu dem verschiebbaren Schlitten ergibt sich eine kürzere Baulänge, entsprechend ungefähr dem einfachen Verstellweg, als beispielsweise bei einer mit dem Schlitten fest verbundenen Gewinde- oder auch Zahnstange. Da Letztere nicht in den Bereich des Spritzgusswerkzeuges reichen können und somit in axialer Richtung neben dem Formkern angeordnet sind ergibt sich in diesen Fällen nämlich in der Freigabeposition eine axiale Ausdehnung entsprechend mindestens dem doppelten Verstellweg. Die Verwendung eines Elektromotors zur kontrollierten Ansteuerung der Rotation der Gewindestange mit einem variablen Drehmoment resultiert in einer präzisen Bewegung des Schlittens und birgt keinerlei Verschmutzungsgefahr durch Hydraulikflüssigkeit.

In einer bevorzugten Ausführungsform ist die Gewindestange auf der dem Spritzgusswerkzeug zugewandten Seite des Elektromotors angeordnet. Dadurch ist eine kabelgebundene Ansteuerung und/oder Energieversorgung des Antriebs axial getrennt von der Gewindestange und Kopplung.

In einer bevorzugten Ausführungsform der Kernzugeinheit erfolgt die Kopplung des Schlittens an die Gewindestange über eine Schlittenkupplung und eine Mutter mit Innengewinde, welche in das Aussengewinde der Gewindestange eingreift. Die Verbindung der Mutter zur Schlittenkupplung ist zumindest in axialer Bewegungsrichtung fest oder gar einstückig. Die Verbindung der Schlittenkupplung zum Schlitten ist einfach lösbar, dadurch kann der Schlitten auch von Hand, ohne Einsatz des Elektromotors, verschoben werden, beispielsweise auf einer Montagebank abseits des Spritzgusswerkzeugs.

Weiter bevorzugt ist eine Rotorachse des Motors mit der Gewindestange über eine Antriebskupplung lösbar verbunden. Ein Austausch von Gewindestange und Mutter, beispielsweise infolge von Verschleiss, oder falls ein Übersetzungsverhältnis zwischen Rotordrehung und Schlittenvortrieb angepasst werden soll, ist somit einfach möglich.

Eine bevorzugte Ausführungsform der Kernzugeinheit umfasst einen relativ zu dem Spritzgusswerkzeug nicht verschiebbar vorgesehenen Schlittenträger oder Basis, wobei die Schlittenlagerung den Schlittenträger mit dem Schlitten verbindet. Der Elektromotor ist in dieser Ausführungsform an dem Schlittenträger montiert. Der Motor ist also nicht auf dem Schlitten angeordnet, was dessen kabelgebundene Ansteuerung und Energieversorgung vereinfacht.

In einer bevorzugten Ausführungsform der Kernzugeinheit umfasst die Schlittenlagerung zwei parallele, in Bewegungsrichtung angeordnete Linearführungselemente oder Schienen, bevorzugt in Form von Kreuzrollenlagerungen. Der Elektromotor und die Gewindestange sind angeordnet zwischen den zwei Linearführungselementen, auf der dem Schlitten abgewandten Seite der Schlittenlagerung. Die Schlittenkopplung ist ausgebildet und angeordnet für eine Verbindung von Mutter und Schlitten quer durch die Ebene zwischen den Linearführungselementen hindurch. Diese Anordnung des Antriebs gewährleistet eine Kraftübertragung ohne Abweichung von der axialen Bewegungsrichtung und unterstützt dadurch eine möglichst reibungsfreie Verschiebung des Schlittens.

In einem Verfahren zur Entformung eines Formteils mittels einer erfindungsgemässen Kernzugeinheit ist eine Steuerung des Elektromotors konfiguriert oder angepasst für eine kontrollierte Verschiebung des Formkerns beziehungsweise des Schlittens in mehreren Phasen. In einer ersten Phase werden Formteil und Formkern gemeinsam in Richtung auf eine Abstreifkante zu verschoben. Während dieser Verschiebung, oder spätestens in einer zweiten Phase nach dem Anschlag des Formteils an der Abstreifkante, wird das Drehmoment des Elektromotors und damit die Lösekraft auf den Formkern erhöht. Dies resultiert in einem Lösen des Formteils vom Formkern. In einer dritten Phase wird der Formkern weiterbewegt und das Formteil spätestens nach einem Verstellweg, welcher der axialen Ausdehnung des Formteils entspricht, vollständig abgestreift. Bevorzugt wird spätestens in einer vierten Phase die Verschiebung des Schlittens wieder abgebremst. Die Steuerung des Elektromotors wird also gezielt eingesetzt zur Anpassung der Kräfte auf den Schlitten, so dass gegen Ende der Verschiebung insbesondere nicht nur eine Abnahme der Beschleunigung resultiert wie bei einem Hydraulikantrieb, sondern tatsächlich eine Abnahme der Geschwindigkeit des Schlittens und damit ein Aufprall des Schlittens auf einen Prellbock gemindert oder vorteilhafterweise ganz vermieden wird.

Die Erfindung wird im Folgenden an mehreren Figuren beschrieben. Die hierbei offenbarten Merkmale bilden je einzeln und in Kombination die Erfindung vorteilhaft weiter. Es zeigen:
- Fig.1a - 1c: eine Längsschnittansicht einer ersten Ausführungsform einer Kernzugeinheit in unterschiedlichen Positionen;
- Fig.2: eine Schrägaufsicht eines Schlittenantriebs der Kernzugeinheit in der Arbeitsposition;
- Fig.3: eine Schrägaufsicht des Schlittenantriebs sowie einen Längsschnitt durch den Schlitten und den Schlittenträger in der Freigabeposition; und
- Fig.4: den Verlauf einer auf den Schlitten wirkenden Antriebskraft und der resultierenden Geschwindigkeit des Schlittens.

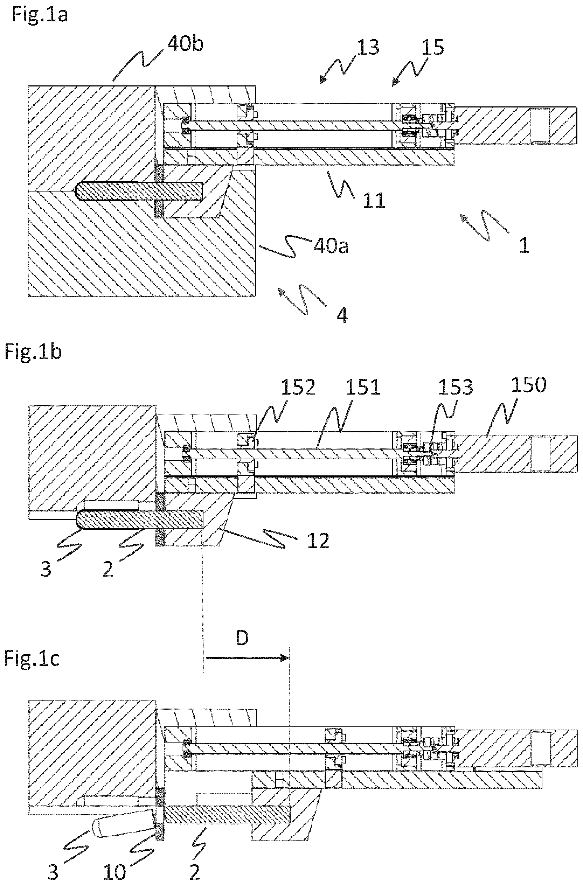

Die Figuren 1a bis 1c zeigen schematisch je einen Längsschnitt durch eine Kernzugeinheit 1 für einen Formkern 2 gemäss der Erfindung, welche zur Herstellung eines länglichen Formteils 3 mit einem Spritzgusswerkzeug 4 zusammenwirkt. In Fig. 1a sind zwei Aussen- oder Halbschalen 40a, 40b des Spritzgusswerkzeugs geschlossen und begrenzen mit dem Formkern 2 in der Arbeitsstellung das frisch gespritzte Formteil 3. In Fig. 1b ist die erste Aussenschale 40a entfernt und die zweite Aussenschale 40b in vertikaler Richtung leicht angehoben und vom Formteil 3 entfernt. In Fig. 1c ist der Formkern 2 horizontal um einen maximalen Verstellweg D in eine Freigabe-, Entform- oder Endstellung verschoben, wobei das Formteil 3 an einer nichtverschobenen Abstreifkante 10 der Kernzugeinheit 1 zurückgehalten und vom Formkern 2 gelöst ist.

Die Abstreifkante bildet eine geschlossene Struktur mit einer lichten Öffnung durch welche der Formkern zumindest annäherungsweise knapp durchpasst. Falls die zweite Aussenschale nicht angehoben wird und das Formteil nach der Bewegung des Formkerns durch einen Auswerfer aus der zweiten Aussenschale gedrückt wird, kann auf einen separaten Abstreifer verzichtet werden.

Die Kernzugeinheit 1 umfasst einen Schlitten 11 oder Wagen, auf welchen ein Kernhalter 12 montiert ist, welcher wiederum den Formkern 2 und optional weitere Formkerne trägt. Die Kernzugeinheit 1 umfasst weiter einen Schlittenträger 13 oder Basis, gegenüber welcher der Schlitten 11 auf einer Schlittenlagerung in die axiale Bewegungsrichtung verschiebbar gelagert ist. Ein Schlittenantrieb 15 umfasst einen Elektromotor 150 und eine Gewindestange 151 oder Spindel, welche von einer Mutter 152 umfasst ist. Die Mutter 152 wiederum ist mit dem Schlitten 11 axialfest verbunden, so dass eine Rotation der Gewindestange 151 in eine axiale Verschiebung des Schlittens 11 in Bewegungsrichtung umgesetzt wird.

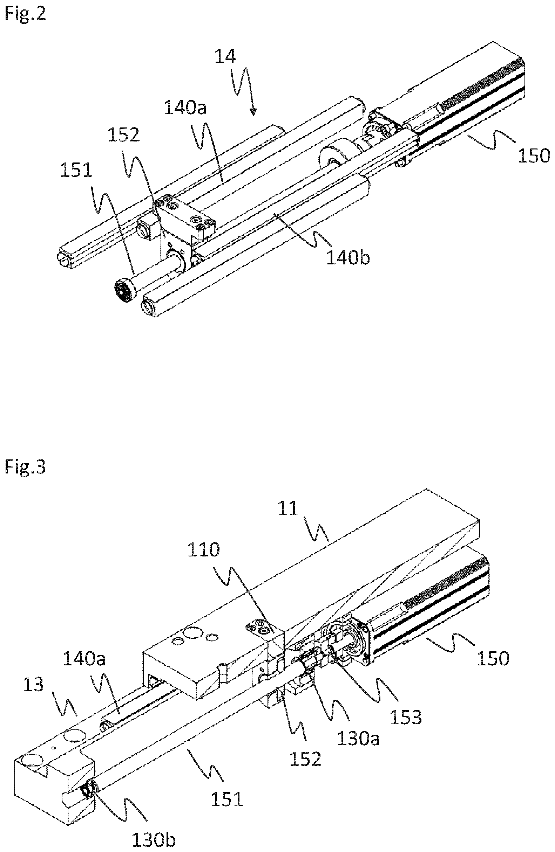

Fig.2 zeigt eine Schrägaufsicht des Schlittenantriebs und der Schlittenlagerung 14 in der Arbeitsposition. Die Schlittenlagerung 14 umfasst parallele Linearführungselemente 140a, 140b oder Schienen zur präzisen Führung der Schlittenbewegung. Die beiden Linearführungselemente 140 haben einen seitlichen Abstand, welcher eine Breite oder Querausdehnung des Elektromotors 150 übertrifft. Der Motor ist auf einer dem Schlitten 11 entgegengesetzten Seite der Schlittenlagerung 14 zwischen den Linearführungselementen 140 am Schlittenträger 13 montiert.

Die Linearführungselemente 140 sind bevorzugt Kreuzrollenführungen oder Gleitläufer-Linearführungen mit Präzisionsrollen, welche sich auszeichnen unter anderem durch einen wartungsarmen Betrieb und Unempfindlichkeit gegenüber Temperaturschwankungen. Kreuzrollenführungen sind auch geeignet zur Aufnahme der beachtlichen Kräfte, welche beim Schliessen der Halbschalen des Spritzgusswerkzeugs entstehen.

Fig.3 zeigt eine Schrägaufsicht des Schlittenantriebs 15 sowie einen Längsschnitt durch den Schlitten 11 und den Schlittenträger 13 in der Freigabeposition. Die Gewindestange 151 ist an ihren Enden mit zwei als Rollen- oder Schrägkugellager ausgebildeten Kugellagern 130a, b im Schlittenträger 13 gelagert und antriebsseitig über eine als Elastomerkupplung ausgebildete Antriebskupplung 153 an den Rotor des Elektromotors 150 gekoppelt, Die Gewindestange 151 ist als Kugelumlaufspindel und die Mutter 152 als Kugelumlaufmutter ausgebildet und mit dem Schlitten 11 über eine Schlittenkupplung 110 lösbar verschraubt.

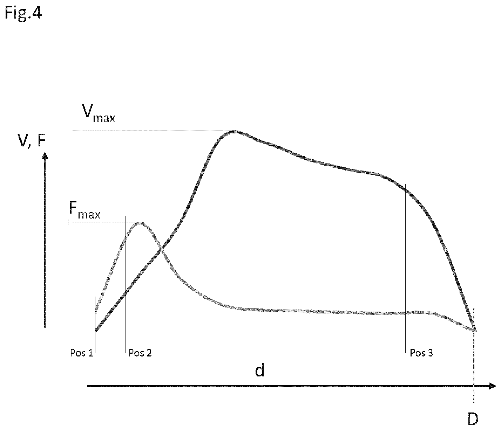

Fig.4 ist eine Darstellung eines typischen Verlaufs einer auf den Schlitten wirkenden Antriebskraft und der resultierenden Geschwindigkeit des Schlittens in Abhängigkeit der Verschiebung d des Formkerns von der Arbeits- in die Freigabeposition D. Die Positionen oder Stellungen des Schlittens sind bezeichnet mit Pos1 (Ausgangsposition, Arbeitsposition des Formkerns), Pos2 (Auftreffen des Formteils auf der Abstreifkante), Pos3 (Einleitung des Bremsvorganges). Die Kraft auf den Schlitten ist maximal in Pos2 bei Beginn der Ablösung des Formteils, die Geschwindigkeit wird bei Pos3 gegen Ende der Bewegung gedrosselt und kontrolliert gegen Null gefahren.

Bei einem Hydraulikantrieb ist typischerweise die Geschwindigkeit des Schlittens beim Aufprall am Ende des Verstellweges maximal, oder durch Reibung nur unwesentlich gebremst. Durch eine motorgesteuerte Abbremsung des Schlittens hat dieser am Ende des Verstellwegs keine nennenswerte Geschwindigkeit mehr, auf einen dezidierten Prellbock zur Absorption der kinetischen Energie des Schlittens kann verzichtet werden. Zur Verringerung der Zykluszeit kann nach dem Ablösen des Formteils bei Pos2 der Schlitten kurzzeitig weiter beschleunigt werden. Die vorgängige und/oder anschliessende Verschiebung des Schlittens in entgegengesetzter Richtung benötigt nur viel geringere Kräfte.

Für einen beispielhaften maximalen Verstellweg D von 150 mm beträgt die maximale Geschwindigkeit Vmax bis zu 750 mm/s, und die Kraftspitze Fmax bis zu 1 kN pro Formkern. Für diesen Verstellweg D ist ein Abstand der Linearführungselemente von mindestens 50 mm bevorzugt, in diesen Zwischenraum passt beispielsweise ein Servomotor SVM-FP34-RN-NTC des Herstellers Infranor mit seiner Breite von 42 mm.

### Bezugszeichen:

- 1: Kernzugeinheit
- 10: Abstreifkante
- 11: Schlitten
- 110: Schlittenkupplung
- 12: Kernhalter
- 13: Schlittenträger
- 130a, b: Kugellager
- 14: Schlittenlagerung
- 140a, b: Linearführungselemente
- 15: Schlittenantrieb
- 150: Elektromotor
- 151: Gewindestange
- 152: Mutter
- 153: Antriebskupplung
- 2: Formkern
- 3: Formteil
- 4: Spritzgusswerkzeug
- 40a, b: Aussenschalen

## Patentansprüche

1. Kernzugeinheit (1) zur Verschiebung eines Formkernes (2) relativ zu einem Spritzgusswerkzeug (4) in einer axialen Bewegungsrichtung, umfassend
- einen Schlitten (11) zur Montage des Formkerns (2),
- eine Schlittenlagerung (14) zur Führung des Schlittens (11) in der axialen Bewegungsrichtung, und
- einen Schlittenantrieb (15),
**dadurch gekennzeichnet, dass** der Schlittenantrieb einen Elektromotor (150) umfasst zur Rotation einer in der axialen Bewegungsrichtung relativ zu dem Spritzgusswerkzeug nicht verschiebbar gelagerten Gewindestange (151).

2. Kernzugeinheit nach Anspruch 1, **dadurch gekennzeichnet, dass** die Gewindestange (151) auf der dem Spritzgusswerkzeug zugewandten Seite des Elektromotors (150) angeordnet ist.

3. Kernzugeinheit nach Anspruch 1 oder 2, **dadurch gekennzeichnet, dass** der Schlitten (11) über eine lösbare Schlittenkupplung (110) und eine Mutter (152) an die Gewindestange (151) gekoppelt ist.

4. Kernzugeinheit nach Anspruch 3, **dadurch gekennzeichnet, dass** die Gewindestange (151) über eine lösbare Antriebskupplung (153) an den Elektromotor (150) gekoppelt ist.

5. Kernzugeinheit nach einem der Ansprüche 1 bis 4, umfassend einen relativ zu dem Spritzgusswerkzeug nicht verschiebbar vorgesehenen Schlittenträger (13) zur Aufnahme der Schlittenlagerung (14), **dadurch gekennzeichnet, dass** der Elektromotor (150) an dem Schlittenträger (13) befestigt ist.

6. Kernzugeinheit nach einem der Ansprüche 1 bis 5, wobei die Schlittenlagerung (14) zwei parallele Linearführungselemente (140a, 140b) umfasst, **dadurch gekennzeichnet, dass** der Elektromotor (150) angeordnet ist zwischen den zwei Linearführungselementen (140a, 140b) auf der dem Schlitten (11) abgewandten Seite der Schlittenlagerung (14).

7. Kernzugeinheit nach einem der Ansprüche 1 bis 6, umfassend eine Steuerung des Elektromotors (150), **dadurch gekennzeichnet, dass** die Steuerung ausgebildet ist zur Abbremsung des Schlittens (11) vor dem Erreichen eines maximalen Verstellwegs (D).

8. Kernzugeinheit nach Anspruch 7, **dadurch gekennzeichnet, dass** die Steuerung ausgebildet ist zur Erhöhung eines Drehmoments des Elektromotors (150) nach einem Beginn der Verschiebung von Formteil (3) und Formkern (2).

9. Verfahren zur Entformung eines Formteils (3) mittels Verschiebung eines Formkerns (2) durch eine Kernzugeinheit (1) gemäss einem der Ansprüche 1 bis 6, mittels Abstreifens des Formteils (3) an einer Abstreifkante (10) der Kernzugeinheit (1), **gekennzeichnet durch** eine Erhöhung eines Drehmoments des Elektromotors (150) nach einem Beginn der Verschiebung von Formteil (3) und Formkern (2) Richtung Abstreifkante (10).

10. Verfahren zur Entformung eines Formteils (3) gemäss Anspruch 9, **gekennzeichnet durch** eine Abbremsung des Schlittens (11) vor dem Erreichen eines maximalen Verstellwegs (D).

11. Verwendung einer Kernzugeinheit nach einem der Ansprüche 1 bis 8 und/oder eines Verfahrens nach einem der Ansprüche 9 oder 10 zur Herstellung von hohlzylindrischen Formteilen für medizinische Injektionsgeräte.
